# FASCICULE DE BREVET EUROPEEN

(11) **EP 3 278 542 B1**
(45) Date de publication et mention de la délivrance du brevet: **02.01.2019**
(21) Numéro de dépôt: 16718415.9
(22) Date de dépôt: 25.03.2016
(51) Int. Cl.: H04L 29/08

(54) **SYSTÈME ET PROCÉDÉ D'EXÉCUTION D'UNE APPLICATION DANS UN TERMINAL MUNI D'UNE CARTE A PUCE**
SYSTEM UND VERFAHREN ZUR AUSFÜHRUNG EINER ANWENDUNG AUF EINEM MIT EINER CHIPKARTE AUSGESTATTETEM ENDGERÄT
SYSTEM AND METHOD FOR EXECUTING AN APPLICATION ON A TERMINAL PROVIDED WITH A CHIP CARD

(30) Priorité: 31.03.2015 FR 1552761
(43) Date de publication de la demande: 07.02.2018
(73) Titulaire: Orange, 75015 Paris (FR)
(72) Inventeur: CHADLI, Youssef, 78800 Houilles (FR); CHATRAS, Bruno, 75012 Paris (FR)
(86) Numéro de dépôt international: PCT/FR2016/050675
(87) Numéro de publication internationale: WO 2016/156714

(56) Documents cités:
- EP-A2- 1 004 992
- WO-A1-2010/097544

## Description

L'invention se situe dans le domaine des terminaux munis d'une carte à puce, et concerne plus particulièrement un procédé et un système pour une exécution d'une application dans un tel terminal. L'invention trouve une application particulièrement avantageuse dans le domaine de la communication entre machines ne nécessitant pas d'interactions humaines, ou de machine à machine (de l'anglais M2M pour « Machine-To-Machine »).

Les terminaux M2M désignent des objets ou appareils équipés de moyens de traitement de l'information et de moyens de transmission/réception de données leur permettant d'interagir notamment avec un réseau de communication tel qu'un réseau mobile (e.g. réseaux LTE pour « Long Term Evolution » ou UMTS pour « Universal Mobile Telecommunications System »). Il existe une grande variété de terminaux M2M : thermomètre, tensiomètre, montre, feu de circulation, véhicule, etc.

On se place par la suite dans le cas d'un terminal M2M prévu pour échanger des données par l'intermédiaire d'un réseau mobile. Un tel terminal M2M est muni d'une carte UICC (pour « Universal Integrated Circuit Card » en anglais) telle que définie dans le document TS 102 223 V12.1.0 de l'ETSI (pour « European Telecommunications Standards Institute » en anglais) intitulé « Smart cards; Card Application Toolkit (CAT) ». Le rôle principal de la carte UICC est de permettre l'attachement du terminal M2M au réseau mobile et l'accès à certains services offerts par le réseau mobile. Une carte UICC est plus particulièrement une carte à puce. Elle se compose généralement d'un microprocesseur et de différents types de mémoire. Quatre exemples d'usages principaux sont distingués pour une carte UICC. Elle est notamment utilisée par un terminal d'un réseau mobile pour authentifier un abonné et ainsi sécuriser l'attachement du terminal au réseau mobile ; pour stocker des informations (e.g. entrées d'un carnet d'adresse, des messages courts SMS pour « Short Message Service », etc.) à la demande du terminal ; pour stocker des paramètres de configuration (e.g. adresse d'un serveur mandataire P-CSCF, numéros d'appel d'urgence, etc.) fournis par exemple par l'opérateur du réseau mobile ; ou encore pour offrir des fonctions d'un serveur Web exécuté au sein de la carte UICC.

Le document de l'OMA (pour « Open Alliance Mobile »), intitulé « Smartcard Web Server Enabler Architecture, Approved Version 1.2 », publié le 5 mars 2013, présente une intégration d'un serveur Web dans une carte UICC. Un serveur web étant défini dans ce document comme un serveur envoyant des pages web en réponse à des requêtes HTTP (pour « HyperText Transfer Protocol » en anglais) émises par des navigateurs web. Une requête cliente est ainsi envoyée à destination d'un serveur web depuis un module client tel qu'un navigateur web et le résultat de la requête est retourné au module client par le serveur web. Les principaux éléments d'une architecture mettant en oeuvre un tel serveur lorsqu'intégré sur une carte à puce sont les suivants :
- un serveur web pour carte à puce ou serveur SCWS (pour « Smart Card Web Server » en anglais) : ce serveur a principalement pour objectif de permettre aux opérateurs de réseaux mobiles d'offrir de nouveaux services ou des services avancés à leurs abonnés. Ces services reposent sur des communications http entre le module client installé sur le terminal et le serveur SCWS installé sur la carte à puce équipant le terminal ;
- une passerelle SCWS : la passerelle est une entité du terminal mobile permettant d'assurer une connexion entre le module client du terminal et le serveur web de la carte à puce à l'aide d'un protocole de transport local, tel que le protocole BIP (pour « Bearer Independent Protocol » en anglais). La passerelle a notamment pour rôle de traduire les messages TCP/IP du module client dans ce protocole de transport local, et inversement ;
- un module client http : il s'agit du module mis en oeuvre par le terminal, qui est à l'origine des requêtes http émises à destination du serveur SCWS ;
- un module client https (pour « HyperText Transfer Protocol Secure » en anglais) : il s'agit d'un module client http pouvant communiquer avec le serveur SCWS à l'aide du protocole TLS (pour « Transport Layer Security » en anglais) ;
- une application d'administration SCWS : il s'agit d'une entité du réseau de l'opérateur utilisée pour l'installation et la mise à jour du serveur SCWS.

Un inconvénient de cette méthode est qu'elle nécessite l'utilisation de technologies web qui ne sont pas toujours adaptées pour une exécution dans le terminal M2M et dans la carte à puce requérant d'importantes capacités de calcul et/ou d'exécution. De plus, un fournisseur de modules applicatifs ne peut pas développer ses propres services et est contraint de recourir aux seuls services proposés par le serveur SCWS mis en oeuvre par la carte à puce, ce qui peut être une source de limitation importante dans le développement d'une application (e.g. services proposés par le serveur SCWS ne permettant pas de mettre en oeuvre certains traitements à réaliser par l'application). En outre, les services proposés par le serveur SCWS sont des services mis en oeuvre à l'aide du protocole http qui ne permettent pas à un fournisseur de modules applicatifs un accès direct aux ressources physiques d'une carte à puce.

Un des buts de l'invention est de remédier à des insuffisances/inconvénients de l'état de la technique et/ou d'y apporter des améliorations.

Selon un premier aspect, l'invention concerne un procédé d'exécution, dans un terminal muni d'une carte à puce, d'une application, dans lequel une entité d'installation met en oeuvre :
- une vérification que la carte à puce dispose de ressources d'exécution pour exécuter un module serveur distant en coopération avec un module client s'exécutant sur le terminal pour fournir l'application ; et la carte à puce ayant été vérifiée disposer des ressources pour exécuter le module serveur distant :
   - une demande de création d'une ressource virtualisée s'appuyant sur les ressources d'exécution, à une entité de gestion de ressources virtualisées de la carte à puce ; et
   - une commande d'installation du module serveur distant dans la carte à puce, pour une exécution, par la ressource virtualisée créée, du module serveur distant, en coopération avec le module client.

Le problème technique à l'origine de l'invention est issu du domaine des communications entre machines ne nécessitant pas d'interactions humaines. La solution proposée est cependant applicable à tout type de terminal muni d'une carte à puce.

Le procédé permet de fournir un environnement d'exécution pour un module serveur distant, constitutif d'une application, au sein d'une carte à puce. Il permet ainsi de tirer profit des ressources d'exécution propres à la carte à puce. Ces ressources d'exécution se définissent plus précisément comme les ressources (ressources de stockage, de calcul, interfaces, etc.) nécessaires à l'exécution d'une suite d'instructions dans un langage machine associé à la carte à puce. Il s'agit des ressources permettant d'exécuter un ensemble d'instructions en langage machine d'un module exécutable tel que le module serveur distant. Les ressources d'exécution sont en particulier vérifiées insuffisantes pour exécuter le module serveur distant lorsque ce dernier comprend un ensemble d'instructions dans un langage machine non pris en charge par la carte à puce équipant le terminal. C'est également le cas lorsque l'entité de gestion de ressources virtualisées de la carte à puce n'est pas en mesure d'allouer les ressources nécessaires à l'exécution du module serveur distant. Le procédé permet de vérifier que la carte à puce dispose des ressources nécessaires à la mise en oeuvre du module serveur distant. Le procédé permet ainsi à un terminal de tirer profit des ressources d'exécution d'une carte à puce l'équipant. Des traitements sont mis en oeuvre par un terminal sans qu'il soit nécessaire pour cela de prévoir une augmentation de ses capacités de traitements. Ceci a notamment pour effet de réduire le coût de fabrication de tels terminaux, ce qui est particulièrement intéressant pour des terminaux M2M.

Le module serveur distant peut ainsi être exécuté par n'importe quelle carte à puce munie d'un processeur avec lequel les instructions en langage machine du module serveur distant sont compatibles, et dont les ressources d'exécution en permettent l'exécution. De même le fournisseur de l'application n'est pas contraint à un langage de programmation particulier lors de la programmation de l'application mise en oeuvre par le terminal.

Dans un mode de réalisation particulier, le terminal peut par ailleurs avantageusement être équipé d'une carte à puce choisie en fonction des besoins en ressources d'exécution requis par les traitements à réaliser par le terminal lui-même. De même, il est possible pour un fournisseur d'application, de proposer différents modules serveurs distants pour une même application, et d'adapter ainsi les traitements proposés en fonction du type de carte à puce équipant le terminal.

L'exécution du module serveur distant par une ressource virtualisée gérée par une entité de gestion de ressources virtualisées permet d'utiliser des ressources d'exécution de la carte à puce sur un modèle dit d'infrastructure en tant que service, ou infrastructure IaaS (pour « Infrastructure as a Service » en anglais). Les ressources d'exécution de la carte à puce sont ainsi disponibles à la demande et peuvent être partagées de façon sécurisée entre plusieurs applications.

Selon une caractéristique particulière du procédé selon le premier aspect, le procédé comprend, lorsque la carte à puce ne dispose pas de ressources d'exécution pour exécuter le module serveur distant, une installation d'un module serveur local dans le terminal pour une exécution par le terminal du module serveur local en coopération avec le module client pour fournir l'application.

La mise en oeuvre du procédé permet ainsi de recourir à un deuxième module exécutable installé dans le terminal, le module serveur local, en fonction des ressources respectivement disponibles dans le terminal et dans la carte à puce. Il est ainsi possible de choisir préférentiellement une exécution d'un module serveur local par le terminal. Le module serveur local est par exemple exécuté par la carte à puce lorsque cette dernière dispose de ressources d'exécution plus importantes que le terminal, et réciproquement le module serveur distant exécuté par le terminal lorsque ce dernier dispose de ressources d'exécution plus importantes que la carte à puce.

En particulier lorsque le terminal ne dispose pas de ressources d'exécution suffisantes pour exécuter le module serveur distant, le procédé permet de garantir le fonctionnement du terminal selon un mode alternatif reposant sur les ressources d'exécution du terminal. Ce mode alternatif est par exemple un fonctionnement dégradé du terminal (ex. traitements réalisés plus lentement, nombre de fonctionnalités réduites, etc).

Selon une caractéristique particulière du procédé selon le premier aspect, le procédé comprend une obtention, auprès de l'entité de gestion de ressources virtualisées, d'une information relative à la disponibilité de ressources d'exécution de la carte à puce, la vérification que la carte à puce dispose de ressources d'exécution pour exécuter le module serveur distant étant réalisée uniquement pour les ressources d'exécution déterminées disponibles au moyen de cette information.

L'obtention d'une information relative à la disponibilité de ressources d'exécution de la carte à puce permet ainsi de limiter la vérification que la carte à puce dispose de ressources d'exécution pour exécuter le module serveur distant aux seules ressources d'exécution disponibles au sein de cette dernière. Une ressource d'exécution est plus particulièrement considérée disponible lorsqu'elle n'est pas réservée à des traitements tiers planifiés au niveau de la carte à puce. Le procédé permet d'assurer une allocation de ressources d'exécution spécifiquement dédiées au module serveur distant. Le procédé permet ainsi de garantir que les ressources d'exécution pour exécuter le module serveur distant ne sont pas susceptibles d'être utilisées par un traitement tiers lors de l'exécution ultérieure du module serveur distant

Dans un mode de réalisation particulier, l'installation du module serveur distant est avantageusement différée jusqu'à ce que des ressources d'exécution de la carte à puce soient disponibles.

Selon une caractéristique particulière du procédé selon le premier aspect, l'application est une application de commande de signal radio, le module serveur client implémentant une première fonction de transmission et de réception du signal radio, et le module serveur distant implémentant une deuxième fonction de commande de la première fonction.

Selon une caractéristique particulière du procédé selon le premier aspect, le procédé comprend en outre une installation, en fonction d'une politique d'installation, d'un module serveur local dans le terminal pour une exécution par le terminal, en alternative au module serveur distant, du module serveur local en coopération avec le module client pour fournir l'application.

La politique d'installation correspond à des préférences relatives à l'installation du module serveur local ou distant. Ces préférences sont par exemple indiquées dans un fichier de configuration associé à l'application, et permettent de prendre en compte des caractéristiques de l'application à exécuter lors de l'installation du module serveur local ou distant. Il est par exemple possible via une telle politique d'installation d'installer préférentiellement un module serveur local plutôt qu'un module serveur distant. Pour une application générant un fort trafic sur une ou plusieurs interfaces radios, un fabricant peut ainsi privilégier une installation d'un module serveur local afin de ne pas encombrer l'interface entre le terminal et la carte à puce.

Selon un deuxième aspect, l'invention concerne un procédé d'exécution, dans un terminal muni d'une carte à puce, d'une application, dans lequel une entité de gestion de ressources virtualisées de la carte à puce met en oeuvre sur demande d'une entité d'installation :
- une création d'une ressource virtualisée s'appuyant sur des ressources d'exécution de la carte à puce ;
- une installation d'un module serveur distant dans la carte à puce, pour une exécution par la ressource virtualisée créée du module serveur distant en coopération avec le module client pour fournir l'application.

Selon une caractéristique particulière, l'entité de gestion de ressources virtualisées met en oeuvre une fourniture, à une entité d'installation de l'application, d'une information relative à la disponibilité de ressources d'exécution de la carte à puce pour exécuter le module serveur distant.

Selon un troisième aspect, l'invention concerne un terminal, comprenant des moyens agencés pour recevoir une carte à puce et une entité d'installation comprenant :
- un module de vérification, agencé pour vérifier que la carte à puce dispose de ressources d'exécution pour exécuter un module serveur distant en coopération avec un module client s'exécutant sur le terminal pour fournir une application ;
- un module d'envoi, activé lorsque la carte à puce est vérifiée disposer de ressources d'exécution pour exécuter le module serveur distant, agencé pour envoyer une demande de création d'une ressource virtualisée s'appuyant sur les ressources d'exécution, à une entité de gestion de ressources virtualisées de la carte à puce ;
- un module de commande, activé lorsque la carte à puce est vérifiée disposer de ressources d'exécution pour exécuter le module serveur distant, agencé pour commander une installation du module serveur distant dans la carte à puce, pour une exécution du module serveur distant par la ressource virtualisée créée en s'appuyant sur les ressources d'exécution, en coopération avec le module client.

Selon un quatrième aspect, l'invention concerne une carte à puce, comprenant des moyens agencés pour mettre en oeuvre une entité de gestion de ressources virtualisées comprenant :
- un module de génération, agencé pour créer au moins une ressource virtualisée s'appuyant sur des ressources d'exécution de la carte à puce ;
- un module d'installation, agencé pour installer un module serveur distant dans la carte à puce, pour une exécution du module serveur distant par la ressource virtualisée créée, en coopération avec le module client.

Les avantages énoncés pour le procédé d'exécution selon l'une quelconque des caractéristiques du premier aspect sont directement transposables respectivement au procédé selon l'une quelconque des caractéristiques du deuxième aspect, au terminal selon le troisième aspect et à la carte à puce selon le quatrième aspect.

Selon un cinquième aspect, l'invention concerne un système d'exécution d'une application comprenant un terminal selon le troisième aspect, muni d'une carte à puce selon le quatrième aspect.

Selon un sixième aspect, l'invention concerne également un programme pour une entité d'installation d'une application, comprenant des instructions de code de programme destinées à commander l'exécution des étapes du procédé d'exécution précédemment décrit, lorsque ledit programme est exécuté par ladite entité d'installation d'une application et un support d'enregistrement lisible par une entité d'installation d'une application sur lequel est enregistré un programme pour une entité d'installation d'une application.

Selon un septième aspect, l'invention concerne également un programme pour une entité de gestion de ressources virtualisées, comprenant des instructions de code de programme destinées à commander l'exécution des étapes du procédé d'exécution précédemment décrit, lorsque ledit programme est exécuté par ladite entité de gestion de ressources virtualisées et un support d'enregistrement lisible par une entité de gestion de ressources virtualisées sur lequel est enregistré un programme pour une entité de gestion de ressources virtualisées.

L'invention sera mieux comprise à l'aide de la description suivante de modes de réalisation particuliers, en référence aux dessins annexés sur lesquels :
- la figure 1 représente un système d'exécution d'une application dans un terminal selon un mode particulier de réalisation ;
- la figure 2 représente des étapes d'un procédé d'exécution d'une application dans un terminal selon un mode particulier de réalisation ;
- le figure 3 représente une entité d'installation d'une application selon un mode particulier de réalisation ;
- la figure 4 représente une entité de gestion de ressources virtualisées d'une carte à puce selon un mode particulier de réalisation.

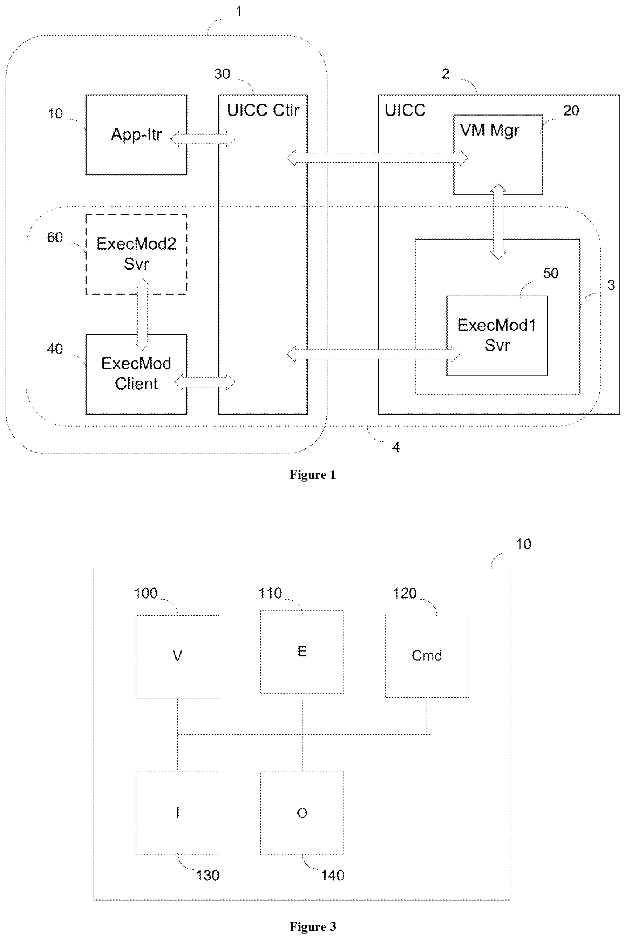

La **figure 1** représente un système d'exécution d'une application 4. Le système d'exécution comprend un terminal 1 muni d'une carte à puce 2. Le terminal 1 comprend plus particulièrement des moyens agencés pour recevoir la carte à puce et une entité d'installation 10 de l'application 4. Le terminal 1 comprend également un module de contrôle 30 de la carte à puce 2. La carte à puce 2 comprend des moyens agencés pour mettre en oeuvre une entité de gestion de ressources virtualisées 20. L'entité d'installation 10 et le module de contrôle 30 sont localisés dans le terminal. L'entité de gestion de ressources virtualisées 20 est localisée dans la carte à puce 2.

L'entité d'installation 10 est un module préalablement installé dans le terminal 1 muni de la carte à puce 2, dont la fonction est d'installer l'application 4 dans le terminal 1 en vue d'une exécution. Pour réaliser cette installation, l'entité d'installation 10 tient notamment compte des ressources d'exécution de la carte à puce 2, ainsi que des caractéristiques de modules 40, 50, 60 composant l'application 4. L'entité d'installation 10 détermine en particulier un environnement d'exécution adapté à l'exécution de chaque module 40, 50, 60 formant l'application 4. Par environnement d'exécution, on entend ici un ensemble de ressources matérielles et logicielles permettant d'exécuter un module.

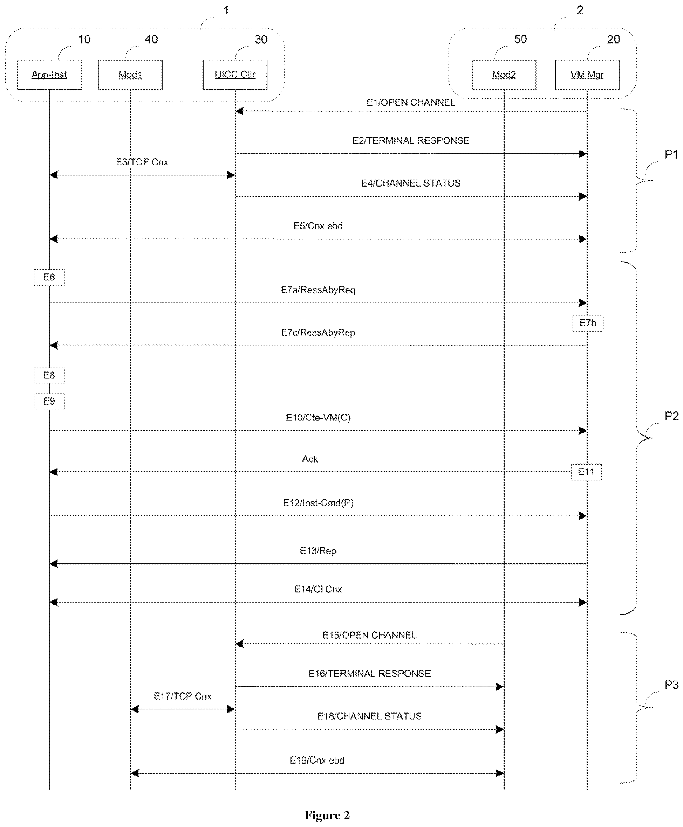

L'application 4 est par exemple un module logiciel permettant de réaliser un ou plusieurs traitements informatiques (analyse de la parole, d'un niveau de stress, d'un rythme cardiaque, fourniture d'informations météorologiques, prise de tension, etc.). Ces traitements sont de diverses natures et sont des exemples de fonctions qu'un terminal est susceptible de fournir. Dans le mode de réalisation décrit, l'application 4 comprend plusieurs modules exécutables 40, 50, 60, chacun ayant pour rôle de réaliser un sous-ensemble de traitements donnés afin de permettre à l'application 4 de remplir sa ou ses fonctions. Les modules exécutables 40, 50, 60 se distinguent plus particulièrement par le type de fonctions qu'ils implémentent. Un module exécutable correspond à un code exécutable. Un module est de ce fait exécutable dans un environnement d'exécution donné, c'est-à-dire par un dispositif donné muni d'un système d'exploitation donné. Par la suite, les termes suivants seront utilisés pour distinguer les différents types de modules :
- « module client » : code exécutable implémentant des fonctions à exécuter par le terminal 1 ;
- « module serveur distant » : code exécutable implémentant des fonctions à exécuter par la carte à puce 2. Un tel module coopère avec un module client ;
- « module serveur local » : code exécutable implémentant des fonctions à exécuter par le terminal 1, en alternative à des fonctions d'un module serveur distant (ceci sera détaillé par la suite en relation avec la figure 2). Un tel module coopère avec un module client.

Dans le mode de réalisation décrit en relation avec la figure 1, le module exécutable 40 est ainsi un module client, le module exécutable 50 un module serveur distant, et le module exécutable 60 un module serveur local.

La carte à puce 2 est insérée dans un emplacement prévu à cet effet dans le terminal 1. L'entité de gestion de ressources virtualisées 20 localisée dans la carte à puce est à titre d'exemple un hyperviseur. Un hyperviseur se définit plus particulièrement comme une plate-forme de virtualisation permettant à plusieurs systèmes d'exploitation de fonctionner simultanément sur une même machine physique. L'entité de gestion de ressources virtualisées 20 gère des ressources virtualisées (également appelées « machines virtuelles »). Elle en gère plus particulièrement la création, la modification et la suppression en fonction des ressources d'exécution de la carte à puce 2. Dans l'exemple de réalisation décrit, le module serveur distant 50 est exécuté par une ressource virtualisée 3, cette dernière ayant été créée par l'entité de gestion de ressources virtualisées 20 lors de la mise en oeuvre du procédé. La ressource virtualisée 3 s'appuie ainsi sur des ressources physiques de la carte à puce 2.

Le module de contrôle 30 assure la communication entre l'entité d'installation 10 d' l'application 4 et l'entité de gestion de ressources virtualisées 20. Le module de contrôle 30 permet également au module client 40 et au module serveur distant 50 de coopérer pour exécuter l'application 4. Les communications entre modules sont à titre d'exemple assurées par un protocole de communication de la couche transport TCP/IP. Il n'existe aucune limitation quant au protocole de communication de la couche transport utilisé pour assurer les échanges entre modules. Ce protocole est par exemple le protocole UDP (pour « User Datagram Protocol » en anglais) ou TCP (pour « Transmission Control Protocol » en anglais).

Les modules 40, 50, 60 formant l'application 4 peuvent également communiquer entre eux. Il peut s'agir d'un lien de communication direct. C'est notamment le cas pour une communication entre deux modules exécutables exécutés par un même dispositif (e.g. communication entre les module serveur local 60 et module client 40). Il peut également s'agir d'un canal de communication établi par l'intermédiaire du module de contrôle 30 (e.g. communication entre les module client 40 et module serveur distant 50).

L'application 4 a été décrite avec trois modules 40, 50, 60. Il n'existe cependant pas de limitation quant au nombre de modules formant l'application 4. En particulier, l'application peut dans un autre mode de réalisation n'être constituée que d'un module client 40 et d'un module serveur distant 50.

Le système d'exécution a été décrit avec une mise en oeuvre d'un hyperviseur en tant qu'entité de gestion de ressources virtualisées. Il n'existe cependant aucune limitation quant à la technique de virtualisation mise en oeuvre. Le système d'exécution est par exemple mis en oeuvre par l'intermédiaire d'un hyperviseur dit de « type I », de « type II », ou encore par l'intermédiaire d'une technique de virtualisation sans hyperviseur.

La **figure 2** représente des étapes d'un procédé d'exécution d'une application dans un terminal 1 selon un mode particulier de réalisation. Dans ce mode de réalisation, on suppose que l'application est composée de trois modules exécutables, dont deux sont représentés sur la figure 2 : les module client 40 et module serveur distant 50. On suppose également que le terminal 1 est un terminal disposant d'une faible capacité de stockage de 1 Mo.

Le procédé comprend trois phases P1, P2 et P3. La phase P1 correspond à l'établissement d'une connexion entre une entité d'installation 10 d'une application et une entité de gestion de ressources virtualisées 20. La phase P2 correspond à l'installation de l'application, et plus précisément des modules client 40 et serveur distant 50 respectivement dans le terminal 1, et dans la carte à puce 2 dont est muni le terminal 1. La phase P3 décrit l'exécution de l'application après installation, avec en particulier l'établissement d'un canal de communication entre les modules client 40 et serveur distant 50. Lors des deux premières phases P1 et P2, seuls sont impliqués au niveau du terminal l'entité d'installation 10 et le module de contrôle 30 de la carte à puce 2. Les deux modules client 40 et serveur distant 50 sont exécutés lors de la troisième phase P3.

La première phase P1 d'établissement d'une connexion entre l'entité d'installation 10 et l'entité de gestion de ressources virtualisées 20 va maintenant être décrite. Cette phase P1 comprend les étapes E1 à E5. L'établissement de la connexion entre l'entité d'installation 10 et l'entité de gestion de ressources virtualisées 20 se fait plus particulièrement selon la procédure décrite dans les documents de spécifications de l'ETSI TS 102 223 et du 3GPP (pour « 3rd Generation Partnership Project » en anglais) TS 31.111.

Lors d'une étape E1, l'entité de gestion de ressources virtualisées 20 envoie une commande d'ouverture d'un canal de communication au module de contrôle 30. La commande est par exemple déclenchée après insertion de la carte à puce 2 dans le terminal 1, à la mise sous tension du terminal 1. La commande est à titre d'exemple une commande USAT (pour « USIM Application Toolkit ») « OPEN CHANNEL » en mode dit « UICC Server Mode » tel que spécifiée au paragraphe 6.4.27.5 du document TS 102.223, version 12. Elle comprend en paramètre un numéro de port TCP indiquant le numéro de port sur lequel le terminal 1 est invité à se mettre en écoute. Le numéro de port fourni par l'entité de gestion de ressources virtualisées 20 est à titre d'exemple prédéfini au niveau de la carte à puce. Dans un autre mode de réalisation le numéro de port est un numéro de port standardisé.

Lors d'une étape E2, le module de contrôle 30 du terminal 1 envoie une réponse USAT « TERMINAL RESPONSE » indiquant à l'entité de gestion de ressources virtualisées 20, que le module de contrôle 30 est en écoute sur le port TCP qui lui a précédemment été fourni à l'étape E1.

Lors d'une étape E3, l'entité d'installation 10 et le module de contrôle 30 établissent une connexion TCP en utilisant le numéro de port fourni par l'entité de gestion de ressources virtualisées 20.

Lors d'une étape E4, le module de contrôle 30 envoie un message USAT « CHANNEL STATUS » indiquant à l'entité de gestion de ressources virtualisées 20 qu'une connexion TCP est établie entre l'entité d'installation 10 et le module de contrôle 30.

Puis dans une étape E5, un canal de communication est établi entre l'entité d'installation 10 et l'entité de gestion de ressources virtualisées 20. Les échanges de données entre ces deux entités sont réalisés via les commandes USAT « SEND DATA » et « RECEIVE DATA » pour les échanges entre le module de contrôle 30 et l'entité de gestion de ressources virtualisée 20. Ces commandes sont ensuite transcrites sur la connexion TCP établie entre le module de contrôle 30 et l'entité d'installation 10. Les commandes « SEND DATA » et « RECEIVE DATA » sont utilisées conformément au document de spécification de l'ETSI TS 102 223.

L'étape E5 clôt la phase P1 du procédé d'exécution. L'entité d'installation 10 est alors en mesure de communiquer avec l'entité de gestion de ressources virtualisées 20.

La phase P2 d'installation de l'application va maintenant être décrite. La phase P2 comprend les étapes E6 à E14.

Lors d'une étape E6, l'entité d'installation 10 vérifie à l'aide d'un fichier de configuration associé à l'application, le type des sous-modules exécutables formant l'application, et détermine une politique d'installation associée à l'application. Le fichier de configuration a par exemple le format suivant :

| Identifiant de module | Type | Identifiant de module alternatif | Ressources d'exécution nécessaires |
|---|---|---|---|
| Mod1 | module client | | StockMem:50Ko |
| Mod2 | module serveur distant | Mod3 | StockMem:20Mo |
| Mod3 | module serveur local | | StockMem:500Ko |

Ce fichier indique dans l'exemple de réalisation décrit ici, que l'application est formée de trois modules exécutables. Il indique en outre que le module Mod1 40 est de type « module client », que le module Mod2 50 est de type « module serveur distant », et que le module Mod3 est de type « module serveur local ». Il indique également que le module Mod3 peut être installé comme alternative au module serveur distant Mod2 50. L'entité d'installation 10 détermine ainsi au moyen de ce fichier une politique d'installation associée à l'application. L'entité d'installation 10 détermine notamment que le module client Mod1 40 est à installer sur le terminal 1, que le module serveur distant Mod2 50 est préférentiellement à installer sur la carte à puce 2, et que le module Mod3 peut être installé en alternative sur le terminal 1. Le fichier de configuration indique également les ressources d'exécution nécessaires pour exécuter un module. Il indique notamment que le module client Mod1 40 requiert 50 Ko de mémoire de stockage, le module serveur distant Mod2 50 20 Mo de mémoire de stockage, et le module Mod3 500 Ko de mémoire de stockage.

Lors d'une étape E7a, l'entité d'installation 10 envoie à l'entité de gestion de ressources virtualisées 20, une demande d'une information relative à la disponibilité de ressources d'exécution de la carte à puce 2.

Dans une étape E7b, l'entité de gestion de ressources virtualisées 20 détermine les ressources d'exécution de la carte à puce 2 disponibles à l'instant où est réalisée l'étape E7b. Dans un autre mode de réalisation, il peut s'agir de la disponibilité de ressources d'exécution sur un intervalle de temps à venir.

Lors d'une étape E7c, l'entité de gestion de ressources virtualisées 20 transmet en réponse à l'entité d'installation 10 une liste de ressources d'exécution de la carte à puce 2 déterminées disponibles. Ce message comprend par exemple une capacité de stockage de la carte à puce 2, un langage machine associé à la carte à puce 2, ou encore un nombre d'opérations par seconde que la carte à puce est en mesure de traiter. A titre d'exemple, le message de réponse indique que la carte à puce 2 dispose d'une capacité de stockage de 100 Mo.

Lors d'une étape E8, l'entité d'installation 10 installe le module client Mod1 40 dans le terminal 1. Le module client Mod1 40 étant de type « module client », il est conçu pour être exécuté par le terminal auquel il est destiné et aucune vérification n'est requise lors de son installation quant aux ressources d'exécution nécessaires à son exécution.

Lors d'une étape E9, l'entité d'installation 10 vérifie que le module de type « module serveur distant » est exécutable par la carte à puce 2. Dans l'exemple décrit, seul le module serveur distant Mod2 50 est concerné par cette vérification. Il s'agit plus précisément de vérifier que la carte à puce 2 dispose de ressources d'exécution pour exécuter le module serveur distant Mod2 50. Pour cela l'entité d'installation 10 compare la liste de ressources disponibles obtenues à l'étape E7c avec les ressources d'exécution nécessaires à l'exécution du module serveur distant Mod2 50 obtenues depuis le fichier de configuration associé à l'application. Dans l'exemple décrit, le module serveur distant Mod2 50 requiert 20 Mo pour pouvoir être exécuté, et la carte à puce 2 dispose d'une capacité de stockage de 100 Mo. La capacité de stockage de la carte à puce 2 étant supérieure aux ressources d'exécution nécessaires pour exécuter le module serveur distant Mod2 50, l'entité d'installation détermine que le module serveur distant Mod2 50 est exécutable par la carte à puce 2.

Dans une étape E10, l'entité d'installation 10 envoie à l'entité de gestion de ressources virtualisées 20 une demande de création d'une ressource virtualisée avec les ressources d'exécution C déterminées disponibles de la carte à puce 2. Les ressources d'exécution C précisent les caractéristiques de la ressource virtualisée à créer (e.g. capacité de stockage, mémoire vive, capacité de calcul). Ces caractéristiques correspondent aux ressources d'exécution nécessaires à l'exécution du module serveur distant Mod2 50 précisées dans le fichier de configuration associé à l'application.

Dans une étape E11, l'entité de gestion de ressources virtualisées 20 crée une ressource virtualisée avec les ressources d'exécution C, puis renvoie un message d'acquittement à l'entité d'installation 10 indiquant à cette dernière que la ressource virtualisée est créée. Dans l'exemple décrit, la ressource virtualisée réserve en particulier 20 Mo d'espace de stockage sur les 100 Mo d'espace de stockage disponible dans la carte à puce 2.

Dans une étape E12, l'entité d'installation 10 commande ensuite une installation du module serveur distant Mod2 50 dans la carte à puce 2, pour une exécution du module serveur distant Mod2 50 par la ressource virtualisée créée à l'étape E11, en coopération avec le module client Mod1 40. Cette commande comprend plus particulièrement le module serveur distant Mod2 50 lui-même, et un paramètre P. Le paramètre P permet d'indiquer à l'entité de gestion de ressources virtualisées 20 un ou des paramètres d'initialisation à transmettre à la ressource virtualisée une fois cette ressource créée. Il s'agit à titre d'exemple d'un numéro de port permettant à la ressource virtualisée de communiquer avec le module client Mod1 40 installé dans le terminal à l'étape E8. A l'issue de cette étape, le module serveur distant Mod2 50 est installé dans la carte à puce 2 et dispose du numéro de port lui permettant de communiquer avec le module client Mod1 40 installé sur le terminal 1.

Dans une étape E13, l'entité de gestion de ressources virtualisées 20 renvoie un message à l'entité d'installation 10, indiquant à cette dernière qu'une ressource virtualisée a été créée pour une exécution du module serveur distant Mod2 50. Le message comprend un identifiant de la ressource virtualisée créée.

Dans une étape E14, l'entité d'installation 10 ferme le canal de communication établi avec l'entité de gestion de ressources virtualisées 20. Cette dernière étape met fin à la phase P2 d'installation de l'application.

La dernière phase P3 du procédé d'exécution concerne l'établissement d'un canal de communication entre le module client Mod1 40 exécuté par le terminal 1 et le module serveur distant Mod2 50 exécuté sur la carte à puce 2. La phase P3 comprend les étapes E15 à E19.

Lors d'une étape E15, le module serveur distant Mod2 50 envoie une commande d'ouverture d'un canal de communication au module de contrôle 30. La commande est par exemple une commande USAT (USIM Application Toolkit) « OPEN CHANNEL » en mode dit « UICC Server Mode » telle que décrite précédemment. Elle comprend en paramètre un numéro de port TCP indiquant le numéro de port sur lequel le terminal 1 est invité à se mettre en écoute. Le numéro de port fourni par le module serveur distant Mod2 50 est à titre d'exemple prédéfini au niveau de la carte à puce. Dans un autre mode de réalisation le numéro de port est un numéro de port standardisé.

Lors d'une étape E16, le terminal 1 envoie une réponse USAT «TERMINAL RESPONSE » indiquant au module serveur distant Mod2 50, que le terminal 1 est en écoute sur le port TCP qui lui a été fourni à l'étape E15.

Lors d'une étape E17, le module client Mod1 40 et le module de contrôle 30 établissent une connexion TCP en utilisant le numéro de port fourni par le module serveur distant Mod2 50.

Lors d'une étape E18, le module de contrôle 30 envoie un message USAT « CHANNEL STATUS » indiquant au module serveur distant Mod2 50 qu'une connexion TCP est établie entre le module client Mod1 40 et le module de contrôle 30.

Puis dans une étape E19, un canal de communication est établi entre le module client Mod1 40 et le module serveur distant Mod2 50. Les échanges de données entre ces deux modules sont réalisés via les commandes USAT « SEND DATA » et « RECEIVE DATA » pour les échanges entre le module de contrôle 30 et le module serveur distant Mod2 50. Ces commandes sont ensuite transcrites sur la connexion TCP établie entre le module de contrôle 30 et le module client Mod1 40.

L'étape E19 clôt la phase P3 du procédé d'exécution. Le module client Mod1 40 est alors en mesure de communiquer avec le module serveur distant Mod2 50 pour une exécution de l'application.

Le procédé d'exécution comprend en outre une étape non représentée sur la figure 2 lorsqu'à l'étape E10, l'entité d'installation 10 détermine que la carte à puce 2 dispose de ressources d'exécution insuffisantes pour exécuter le module serveur distant Mod2 50. Dans ce cas, l'entité d'installation 10 installe le module serveur local Mod3 dans le terminal, afin qu'il soit exécuté par le terminal comme alternative au module serveur distant Mod2 50, et qu'il coopère avec le module client 40 pour exécuter l'application.

Dans un autre mode de réalisation, l'installation du module serveur local Mod3 dans le terminal est décidée en fonction d'un paramétrage du terminal configuré par un utilisateur ou un fabricant du terminal. Cette installation peut également résulter d'une préférence d'installation indiquée dans le fichier de configuration. L'utilisateur ou le fabricant du terminal peut alors choisir un type d'installation souhaitée, en fonction par exemple, de caractéristiques de l'application et de la rapidité estimée d'exécution, respectivement du module serveur distant Mod2 50 par la carte à puce 2, et du module serveur local Mod3 50 par le terminal.

Dans un autre mode de réalisation, la commande d'installation du module serveur distant Mod2 50 dans la carte à puce 2 est comprise dans la demande de création d'une ressource virtualisée. Un unique envoi est alors mis en oeuvre pour réaliser les étapes E10 et E12.

Dans un mode de réalisation particulier, le procédé d'exécution est par exemple appliqué aux fonctions RF (pour « Radio Frequency » en anglais) et BBU (pour « Base Band Unit » en anglais) d'un terminal mobile. La fonction RF assure la transmission et la réception d'un signal radio. Cette fonction pour un terminal correspond plus particulièrement à l'antenne radio du terminal et permet de se connecter à un réseau mobile. La fonction BBU assure quant à elle la commande de la fonction RF et la gestion des procédures de connexion au réseau mobile.

Il est notamment possible grâce au procédé d'exécuter la fonction BBU par la carte à puce d'un terminal. Pour cela il suffit d'implémenter un module serveur distant jouant le rôle de la fonction BBU exécuté par la carte à puce et un module client jouant le rôle de la fonction RF exécuté par le terminal.

Outre les avantages précédemment mentionnés permettant de réduire l'utilisation des ressources du terminal tout en offrant la possibilité d'utiliser à profit les ressources d'exécution de la carte à puce équipant le terminal, ce mode de réalisation présente de nombreux autres avantages, dont entre autres :
- une réduction du coût de fabrication des terminaux ;
- de nouvelles fonctionnalités de blocage de l'usage du terminal, la fonction BBU étant mise en oeuvre par la carte à puce peut en effet être, par exemple, désactivée par un opérateur de réseau mobile ;
- une compatibilité des terminaux avec différentes technologies de réseaux mobiles est rendue possible sans que des composants spécifiques soient nécessaires au niveau du terminal pour assurer cette compatibilité.

La **figure 3** représente une entité d'installation 10, dans un terminal, d'une application comprenant un module serveur distant coopérant avec un module client s'exécutant sur ledit terminal. L'entité d'installation 10 comprend :
- un module de vérification 100, agencé pour vérifier que la carte à puce dispose de ressources d'exécution pour exécuter le module serveur distant en coopération avec le module client s'exécutant sur le terminal pour fournir une application ;
- un module d'envoi 110, activé lorsque la carte à puce est vérifiée disposer de ressources d'exécution pour exécuter le module serveur distant, et agencé pour envoyer une demande de création d'une ressource virtualisée s'appuyant sur les ressources d'exécution à une entité de gestion de ressources virtualisées de la carte à puce ;
- un module de commande 120, activé lorsque la carte à puce est vérifiée disposer de ressources d'exécution pour exécuter le module serveur distant, et agencé pour commander une installation du module serveur distant dans la carte à puce, pour une exécution de ce module serveur distant par la ressource virtualisée créée en s'appuyant sur les ressources d'exécution de la carte à puce, en coopération avec le module client.

Dans un mode de réalisation particulier, l'entité d'installation 10 comprend un module d'installation 130, agencé pour, lorsque la carte à puce ne dispose pas de ressources d'exécution pour exécuter le module serveur distant, installer un module serveur local dans le terminal pour une exécution par le terminal de ce module serveur local en coopération avec le module client.

Dans un autre mode de réalisation particulier, l'entité d'installation 10 comprend un module d'obtention 140, agencé pour obtenir, auprès d'une entité de gestion de ressources virtualisées, une information relative à la disponibilité de ressources d'exécution de la carte à puce, le module de vérification 100 étant alors agencé pour vérifier que la carte à puce dispose de ressources d'exécution pour exécuter le module serveur distant, uniquement pour les ressources d'exécution déterminées disponibles au moyen de cette information.

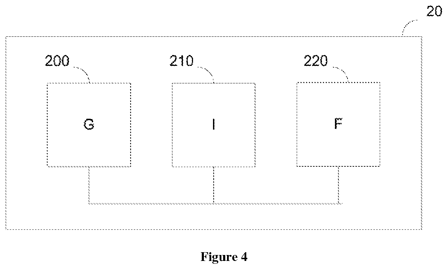

La **figure 4** représente une entité de gestion de ressources virtualisées 20 mise en oeuvre par une carte à puce équipant un terminal, pour une exécution d'au moins une application comprenant un module serveur distant coopérant avec un module client s'exécutant sur le terminal. L'entité de gestion de ressources virtualisées comprend :
- un module de génération 200, agencé pour créer au moins une ressource virtualisée s'appuyant sur des ressources d'exécution de la carte à puce ;
- un module d'installation 210, agencé pour installer le module serveur distant dans la carte à puce, pour une exécution du module serveur distant par la ressource virtualisée créée, en coopération avec le module client.

Dans un autre mode de réalisation particulier, l'entité de gestion de ressources virtualisées 20 comprend un module de fourniture 220, agencé pour fournir, à une entité d'installation de l'application s'exécutant sur le terminal, une information relative à la disponibilité de ressources d'exécution de la carte à puce, pour une exécution du module serveur distant sur la carte à puce en coopération avec le module client.

L'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en oeuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 100, 110, 120, 130 et 140 sont agencés pour mettre en oeuvre le procédé d'exécution précédemment décrit. Il s'agit de préférence de modules logiciels comprenant des instructions logicielles pour faire exécuter les étapes du procédé d'exécution précédemment décrit, mises en oeuvre par une entité d'installation d'une application.

L'invention concerne donc aussi :
- un programme pour une entité d'installation, comprenant des instructions de code de programme destinées à commander l'exécution des étapes du procédé d'exécution précédemment décrit, lorsque ledit programme est exécuté par ladite entité d'installation ;
- un support d'enregistrement lisible par une entité d'installation sur laquelle est enregistré le programme pour une entité d'installation.

De même, les modules 200, 210 et 220 sont agencés pour mettre en oeuvre le procédé d'exécution précédemment décrit. Il s'agit de préférence de modules logiciels comprenant des instructions logicielles pour faire exécuter les étapes du procédé d'exécution précédemment décrit, mises en oeuvre par une entité de gestion de ressources virtualisées. L'invention concerne donc aussi :
- un programme pour une entité de gestion de ressources virtualisées, comprenant des instructions de code de programme destinées à commander l'exécution des étapes du procédé d'exécution précédemment décrit, lorsque ledit programme est exécuté par ladite entité de gestion de ressources virtualisées ;
- un support d'enregistrement lisible par une entité de gestion de ressources virtualisées sur laquelle est enregistré le programme pour une entité de gestion de ressources virtualisées.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé d'exécution, dans un terminal muni d'une carte à puce, d'une application, dans lequel une entité d'installation met en oeuvre :
- une vérification (E7) que ladite carte à puce dispose de ressources d'exécution pour exécuter un module serveur distant en coopération avec un module client s'exécutant sur ledit terminal pour fournir ladite application ;
et ladite carte à puce ayant été vérifiée disposer desdites ressources pour exécuter ledit module serveur distant :
- une demande (E10) de création d'une ressource virtualisée s'appuyant sur lesdites ressources d'exécution, à une entité de gestion de ressources virtualisées de la carte à puce ; et
- une commande d'installation dudit module serveur distant dans la carte à puce, pour une exécution, par la ressource virtualisée créée, dudit module serveur distant, en coopération avec le module client.

2. Procédé selon la revendication 1, comprenant, lorsque la carte à puce ne dispose pas de ressources d'exécution pour exécuter le module serveur distant, une installation d'un module serveur local dans le terminal pour une exécution par le terminal dudit module serveur local en coopération avec ledit module client pour fournir ladite application.

3. Procédé selon la revendication 1, comprenant en outre une obtention (E7a-E7c), auprès de l'entité de gestion de ressources virtualisées, d'une information relative à la disponibilité de ressources d'exécution de la carte à puce, la vérification (E10) que ladite carte à puce dispose de ressources d'exécution pour exécuter ledit module serveur distant étant réalisée uniquement pour les ressources d'exécution déterminées disponibles au moyen de ladite information.

4. Procédé selon la revendication 1, dans lequel ladite application est une application de commande de signal radio, ledit module serveur client implémentant une première fonction de transmission et de réception dudit signal radio, et ledit module serveur distant implémentant une deuxième fonction de commande de ladite première fonction.

5. Procédé d'exécution, dans un terminal muni d'une carte à puce, d'une application, dans lequel une entité de gestion de ressources virtualisées de ladite carte à puce met en oeuvre sur demande d'une entité d'installation :
- une fourniture, à l'entité d'installation de l'application, d'une information relative à la disponibilité de ressources d'exécution de la carte à puce pour exécuter ledit module serveur distant;
- une création d'une ressource virtualisée s'appuyant sur des ressources d'exécution de ladite carte à puce ;
- une installation d'un module serveur distant dans la carte à puce, pour une exécution par la ressource virtualisée créée dudit module serveur distant en coopération avec le module client pour fournir ladite application.

6. Terminal, comprenant des moyens agencés pour recevoir une carte à puce et une entité d'installation comprenant :
- un module de vérification (100), agencé pour vérifier que ladite carte à puce dispose de ressources d'exécution pour exécuter un module serveur distant en coopération avec un module client s'exécutant sur ledit terminal pour fournir une application ;
- un module d'envoi (110), activé lorsque ladite carte à puce est vérifiée disposer de ressources d'exécution pour exécuter ledit module serveur distant, agencé pour envoyer une demande de création d'une ressource virtualisée s'appuyant sur lesdites ressources d'exécution, à une entité de gestion de ressources virtualisées de la carte à puce ;
- un module de commande (120), activé lorsque ladite carte à puce est vérifiée disposer de ressources d'exécution pour exécuter ledit module serveur distant, agencé pour commander une installation dudit module serveur distant dans la carte à puce, pour une exécution dudit module serveur distant par la ressource virtualisée créée en s'appuyant sur lesdites ressources d'exécution, en coopération avec le module client.

7. Carte à puce, comprenant des moyens agencés pour mettre en oeuvre une entité de gestion de ressources virtualisées (20) comprenant :
- un module de fourniture (220), agencé pour une fourniture, à une entité d'installation de l'application, d'une information relative à la disponibilité de ressources d'exécution de la carte à puce pour exécuter un module serveur distant;
- un module de génération (200), agencé pour créer au moins une ressource virtualisée s'appuyant sur des ressources d'exécution de ladite carte à puce ;
- un module d'installation (210), agencé pour installer dudit module serveur distant dans la carte à puce, pour une exécution dudit module serveur distant par la ressource virtualisée créée, en coopération avec le module client.

8. Système d'exécution d'une application comprenant un terminal (1) selon la revendication 6, muni d'une carte à puce (2) selon la revendication 7.

9. Programme pour une entité d'installation d'une application, comprenant des instructions de code de programme destinées à commander l'exécution des étapes du procédé selon l'une des revendications 1 à 4, lorsque ledit programme est exécuté par ladite entité.

10. Programme pour une entité de gestion de ressources virtualisées, comprenant des instructions de code de programme destinées à commander l'exécution des étapes du procédé selon la revendication 5 lorsque ledit programme est exécuté par ladite entité.

11. Support d'enregistrement lisible par une entité d'installation d'une application, sur lequel est enregistré le programme selon la revendication 9.

12. Support d'enregistrement lisible par une entité de gestion de ressources virtualisées, sur lequel 10 est enregistré le programme selon la revendication 10.

## Patentansprüche

1. Verfahren zur Ausführung, auf einem mit einer Chipkarte ausgestatteten Endgerät, einer Anwendung, wobei eine Installationseinheit durchführt:
- eine Überprüfung (E7), ob die Chipkarte über Ausführungsressourcen verfügt, um im Zusammenwirken mit einem Client-Modul, das auf dem Endgerät ausgeführt wird, ein entferntes Server-Modul auszuführen, um die Anwendung zu liefern; und nachdem verifiziert wurde, dass die Chipkarte über die Ressourcen verfügt, um das entfernte Server-Modul auszuführen:
- eine Anforderung (E10) der Erzeugung einer virtualisierten Ressource, gestützt auf die Ausführungsressourcen, an eine Einheit zur Verwaltung virtualisierter Ressourcen der Chipkarte; und
- eine Steuerung der Installation des entfernten Server-Moduls auf der Chipkarte, für eine Ausführung, durch die erzeugte virtualisierte Ressource, des entfernten Server-Moduls im Zusammenwirken mit dem Client-Modul.

2. Verfahren nach Anspruch 1, welches, wenn die Chipkarte nicht über Ausführungsressourcen verfügt, um das entfernte Server-Modul auszuführen, eine Installation eines lokalen Server-Moduls auf dem Endgerät umfasst, für eine Ausführung, durch das Endgerät, des lokalen Server-Moduls im Zusammenwirken mit dem Client-Modul, um die Anwendung zu liefern.

3. Verfahren nach Anspruch 1, welches außerdem eine Gewinnung (E7a-E7c), von der Einheit zur Verwaltung virtualisierter Ressourcen, einer Information bezüglich der Verfügbarkeit von Ausführungsressourcen der Chipkarte umfasst, wobei die Überprüfung (E10), ob die Chipkarte über Ausführungsressourcen verfügt, um das entfernte Server-Modul auszuführen, nur für die Ausführungsressourcen durchgeführt wird, die mittels dieser Information als verfügbar bestimmt wurden.

4. Verfahren nach Anspruch 1, wobei die Anwendung eine Anwendung zur Funksignalsteuerung ist, wobei das Client-Server-Modul eine erste Sende- und Empfangsfunktion für das Funksignal implementiert und das entfernte Servermodul eine zweite Funktion zur Steuerung der ersten Funktion implementiert.

5. Verfahren zur Ausführung, auf einem mit einer Chipkarte ausgestatteten Endgerät, einer Anwendung, wobei eine Einheit zur Verwaltung virtualisierter Ressourcen der Chipkarte auf Anforderung einer Installationseinheit durchführt:
- eine Lieferung, an die Installationseinheit der Anwendung, einer Information bezüglich der Verfügbarkeit von Ausführungsressourcen der Chipkarte, um das entfernte Server-Modul auszuführen;
- eine Erzeugung einer virtualisierten Ressource, gestützt auf Ausführungsressourcen der Chipkarte;
- eine Installation eines entfernten Server-Moduls auf der Chipkarte, für eine Ausführung, durch die erzeugte virtualisierte Ressource, des entfernten Server-Moduls im Zusammenwirken mit dem Client-Modul, um die Anwendung zu liefern.

6. Endgerät, welches Mittel, die dafür ausgelegt sind, eine Chipkarte aufzunehmen, und eine Folgendes umfassende Installationseinheit umfasst:
- ein Überprüfungsmodul (100), das dafür ausgelegt ist zu überprüfen, ob die Chipkarte über Ausführungsressourcen verfügt, um im Zusammenwirken mit einem Client-Modul, das auf dem Endgerät ausgeführt wird, ein entferntes Server-Modul auszuführen, um eine Anwendung zu liefern;
- ein Sendemodul (110), das aktiviert wird, wenn verifiziert wurde, dass die Chipkarte über Ausführungsressourcen verfügt, um das entfernte Server-Modul auszuführen, und dafür ausgelegt ist, eine Anforderung der Erzeugung einer virtualisierten Ressource, gestützt auf die Ausführungsressourcen, an eine Einheit zur Verwaltung virtualisierter Ressourcen der Chipkarte zu senden;
- ein Steuerungsmodul (120), das aktiviert wird, wenn verifiziert wurde, dass die Chipkarte über Ausführungsressourcen verfügt, um das entfernte Server-Modul auszuführen, und dafür ausgelegt ist, eine Installation des entfernten Server-Moduls auf der Chipkarte zu steuern, für eine Ausführung des entfernten Server-Moduls durch die erzeugte virtualisierte Ressource, gestützt auf die Ausführungsressourcen, im Zusammenwirken mit dem Client-Modul.

7. Chipkarte, welche Mittel umfasst, die dafür ausgelegt sind, eine Einheit zur Verwaltung virtualisierter Ressourcen (20) zu implementieren, welche umfasst:
- ein Liefermodul (220), das für eine Lieferung, an eine Installationseinheit der Anwendung, einer Information bezüglich der Verfügbarkeit von Ausführungsressourcen der Chipkarte, um ein entferntes Server-Modul auszuführen, ausgelegt ist;
- ein Erzeugungsmodul (200), das dafür ausgelegt ist, wenigstens eine virtualisierte Ressource zu erzeugen, gestützt auf Ausführungsressourcen der Chipkarte;
- ein Installationsmodul (210), das dafür ausgelegt ist, das entfernte Server-Modul auf der Chipkarte zu installieren, für eine Ausführung des entfernten Server-Moduls durch die erzeugte virtualisierte Ressource, im Zusammenwirken mit dem Client-Modul.

8. System zur Ausführung einer Anwendung, welches ein Endgerät (1) nach Anspruch 6 umfasst, das mit einer Chipkarte (2) nach Anspruch 7 ausgestattet ist.

9. Programm für eine Einheit zur Installation einer Anwendung, welches Programmcodeanweisungen umfasst, die dazu bestimmt sind, die Ausführung der Schritte des Verfahrens nach einem der Ansprüche 1 bis 4 zu steuern, wenn das Programm von der Einheit ausgeführt wird.

10. Programm für eine Einheit zur Verwaltung virtualisierter Ressourcen, welches Programmcodeanweisungen umfasst, die dazu bestimmt sind, die Ausführung der Schritte des Verfahrens nach Anspruch 5 zu steuern, wenn das Programm von der Einheit ausgeführt wird.

11. Aufzeichnungsmedium, das von einer Einheit zur Installation einer Anwendung lesbar ist und auf dem das Programm nach Anspruch 9 aufgezeichnet ist.

12. Aufzeichnungsmedium, das von einer Einheit zur Verwaltung virtualisierter Ressourcen lesbar ist und auf dem das Programm nach Anspruch 10 aufgezeichnet ist.

## Claims

1. Method for executing an application on a terminal provided with a chip card, in which an installation entity implements the following:
- a verification (E7) that said chip card has execution resources for executing a remote server module in cooperation with a client module which is being executed on said terminal to provide said application;
and, said chip card having been verified as having said resources for executing said remote server module:
- a request (E10) for creating a virtualized resource based on said execution resources, to a virtualized resources management entity of the chip card; and
- a command for installing said remote server module in the chip card, for the execution, by the created virtualized resource, of said remote server module, in cooperation with the client module.

2. Method according to Claim 1, comprising, when the chip card does not have execution resources for executing the remote server module, an installation of a local server module in the terminal, to enable the terminal to execute said local server module in cooperation with said client module to provide said application.

3. Method according to Claim 1, further comprising obtaining (E7a-E7c), from the virtualized resources management entity, information on the availability of execution resources on the chip card, the verification (E10) that said chip card has execution resources for executing said remote server module being carried out solely for the execution resources determined to be available by means of said information.

4. Method according to Claim 1, wherein said application is a radio signal command application, said client server module implementing a first function of transmitting and receiving said radio signal, and said remote server module implementing a second command function of said first function.

5. Method for executing an application on a terminal provided with a chip card, in which a virtualized resources management entity of said chip card implements, at the request of an installation entity:
- supply, to the installation entity of the application, of information on the availability of execution resources on the chip card for executing said remote server module;
- creation of a virtualized resource based on execution resources of said chip card; and
- installation of a remote server module in the chip card, for the execution, by the created virtualized resource, of said remote server module, in cooperation with the client module, to provide said application.

6. Terminal, comprising means arranged to receive a chip card and an installation entity comprising:
- a verification module (100), arranged to verify that said chip card has execution resources for executing a remote server module in cooperation with a client module which is being executed on said terminal to provide an application;
- a sending module (110), activated when said chip card is verified as having execution resources for executing said remote server module, and arranged for sending a request for creating a virtualized resource based on said execution resources, to a virtualized resources management entity of the chip card; and
- a command module (120), activated when said chip card is verified as having execution resources for executing said remote server module, and arranged for commanding the installation of said remote server module in the chip card, to enable said remote server module to be executed by the virtualized resource created based on said execution resources, in cooperation with the client module.

7. Chip card, comprising means arranged to implement a virtualized resources management entity (20) comprising:
- a supply module (220), arranged to supply, to an installation entity of the application, of information on the availability of execution resources on the chip card for executing a remote server module;
- a generation module (200), arranged to create at least one virtualized resource based on execution resources of said chip card; and
- an installation module (210), arranged to install said remote server module in the chip card, for the execution of said remote server module by the created virtualized resource, in cooperation with the client module.

8. System for executing an application, comprising a terminal (1) according to Claim 6, provided with a chip card (2) according to Claim 7.

9. Program for an application installation entity, comprising program code instructions intended to command the execution of the steps of the method according to any of Claims 1 to 4, when said program is executed by said entity.

10. Program for a virtualized resources management entity, comprising program code instructions intended to command the execution of the steps of the method according to Claim 5, when said program is executed by said entity.

11. Recording medium, readable by an application installation entity, on which the program according to Claim 9 is recorded.

12. Recording medium, readable by a virtualized resources management entity, on which the program according to Claim 10 is recorded.
